# EUROPEAN PATENT APPLICATION

(11) **EP 3 534 503 A1**
(43) Date of publication of application: **04.09.2019**
(21) Application number: 19154729.8
(22) Date of filing: 31.01.2019
(51) Int. Cl.: H02K 5/04, H02K 15/04, H02K 15/14, H02K 5/22

(54) **CASING AND ELECTRIC MOTOR USING THE SAME**

(30) Priority: 01.03.2018 CN 201810174414
(71) Applicant: Johnson Electric International AG, 3280 Murten (CH)
(72) Inventor: Cheung, Chiwang, Hong Kong Shatin, N.T. (HK); Boccadamo, Dario, Hong Kong Shatin, N.T. (HK); Sun, Ning, Hong Kong Shatin, N.T. (HK); Zhao, Shudan, Hong Kong Shatin, N.T. (HK)
(74) Representative: Hocking, Adrian Niall

(57) **Abstract**

An electric motor (100) includes a casing (20) having a cylindrical shell (21), a stator (60) received in the casing (20), and a rotor (50) rotating relative to the stator (60), the cylindrical shell (21) of the casing (20) having an opening (210) at both ends, a division plate (217) being integrally formed in the cylindrical shell (21) by impact extrusion process, and the division plate (217) divides the cylindrical shell (21) into two parts of a first cavity (221) and a second cavity (223). An end cap (23) formed by impact extrusion process is matched with the end of the cylindrical shell (21) by laser welding, and the stator (60) and the rotor (50) are received in the first cavity (221) of the casing (20).

## Description

### FIELD

The present disclosure relates to the arts of casing to be mounted in motor, and more particularly to an electric motor having the casing.

### BACKGROUND

Generally, a motor includes a cylindrical casing for accommodating components such as a stator and a rotor, the casing having an open end and a closed end. At present, an electronic control unit for controlling operation of the motor is assembled in the motor casing to construct an integrated motor, especially in applications such as electric power steering (EPS) systems, which requires high cleanliness in the inner cavity of the motor casing. It is necessary to weld a partition in the casing of the motor to separate the components of the motor and the electronic control unit described above. However, there are many disadvantages in the casing of the above motor. On the one hand, different customers have different requirements on the axial length and shape of the bushing, which determines that each type of casing requires exclusive mold to manufacture, which has high cost and complicated process. On the other hand, conductive particles generated by welding the partition in the motor casing are easily adhered to the inner surface of the casing, which causes the electric controlling unit or the conductive terminals in the casing to be short-circuited, thus the reliability of the motor is very low.

### SUMMARY OF THE INVENTION

In view of this, the present disclosure is designed to provide a motor casing with improved structure, which is capable of effectively improving the reliability of components in the motor casing.

The present disclosure discloses an electric motor comprises a casing, a stator mounted in the casing and a rotor rotating relative to the stator. The casing comprises a cylindrical shell having an opening at both ends, a division plate integrated in the cylindrical shell by impact extrusion process, an end cap made by impact extrusion process being matched with the end of the cylindrical shell by laser welding. The division plate divides the cylindrical shell into two parts of a first cavity and a second cavity, and the stator and the rotor are received in the first cavity of the casing.

Preferably, the division plate includes a main plate and a plurality of holes disposed on the main plate. The stator includes a plurality of conductive terminals extending along an axis direction of the motor, the conductive terminals respectively passing through the holes of the division plate to reach the second cavity for conducting driving signal.

Preferably, the second cavity is configured to accommodate an electronic control unit which is connected with the plurality of conductive terminals. The electronic control unit is configured to receive external power supply and/or control signals and generate corresponding driving signals to control the operation of the motor.

Preferably, a first bearing is mounted on the division plate, a second bearing is mounted on the end cap, and a rotating shaft of the rotor is supported by the first bearing and the second bearing.

Preferably, the end cap includes an end portion and an annular portion extending from an edge of the end portion, the annular portion being inserted into the opening of the cylindrical shell, or one end of the cylindrical shell being inserted into the annular portion for sealing.

Preferably, the annular portion of the end cap and the end of the cylindrical shell are assembled by interference fitted.

Preferably, the end cap and the cylindrical shell are fixed by laser welding. An annular groove is formed on an outer circumference of the end of the cylindrical shell, the annular portion of the end cap is matched with the annular groove, or an annular groove is formed on an outer circumference of the annular portion of the end cap, the end of the cylindrical shell is matched with the annular groove of the end cap.

Preferably, an annular flange is formed on the annular portion of the end cap or the end of the cylindrical shell and received in corresponding annular groove so as to form a coplanar surface by the end cap and the cylindrical shell.

Preferably, the main plate of the division plate, the hole of the division plate and the cylindrical shell are synchronously and integrally formed by impact extrusion process. The term "synchronously" here means a one-step molding.

Compared with the prior motor, the cylindrical shell and the end cap are assembled together by laser welding. The division plate and the cylinder shell are synchronously and integrally formed by impact extrusion process, and no additional welding process is used. It can avoid contamination of conductive particles produced in the operation process inside the cylindrical shell, improve the reliability of the motor, and make different shapes according to requirements of different customers, thus reducing the cost.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiment.
Fig. 1 is an isometric view of a motor in accordance with an exemplary embodiment of the present disclosure.
Fig. 2 is an isometric exploded view of the motor of Fig. 1.
Fig. 3 is a cross-sectional view of the motor of Fig. 1.
Fig. 4 is an isometric exploded view of the motor of Fig. 1, viewed from another aspect.
Fig. 5 is a top view of a rotor, a stator core and a winding shown in Fig. 2, with a casing being removed away.
Fig. 6 is an isometric exploded view of a rotor of the motor shown in Fig. 2.

### DETAILED DESCRIPTION OF THE PREFERRED EMBODIMENTS

Embodiments of the present disclosure will be described in detail in conjunction with the drawings. It should be noted that the figures are illustrative rather than limiting. The figures are not drawn to scale, do not illustrate every aspect of the described embodiments, and do not limit the scope of the present disclosure. The following examples are illustrated with an embodiment of a capacitive sensing medical device.

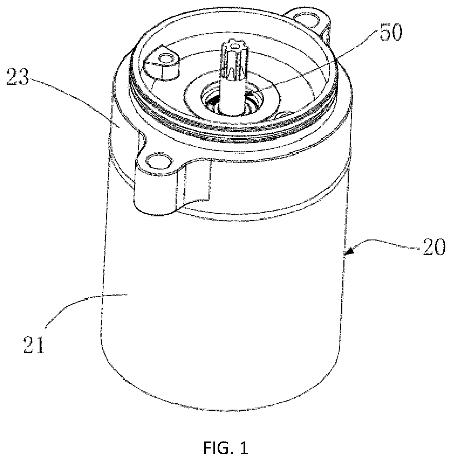

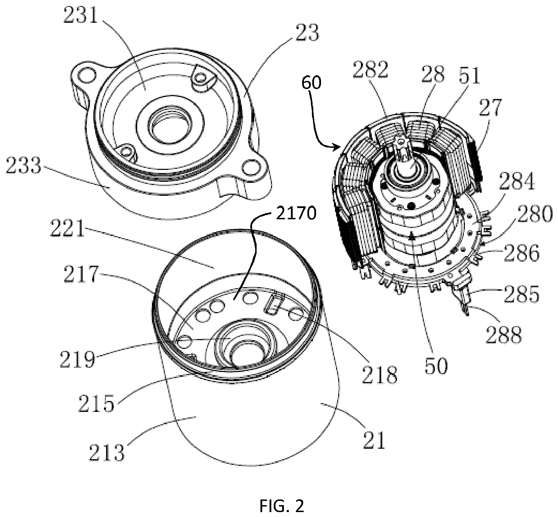

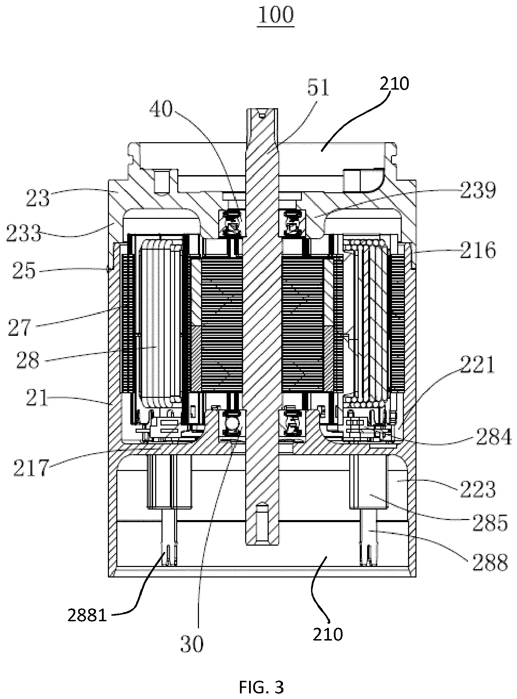

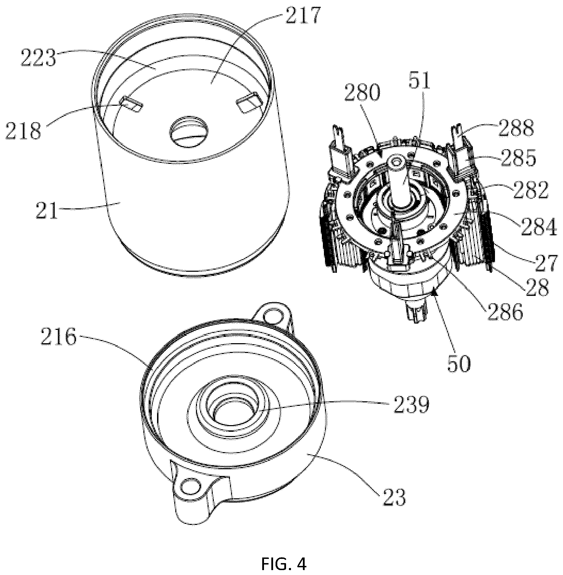

Referring to figures 1 through 4, a motor 100 according to an embodiment of the present disclosure includes a casing 20, a stator 60 mounted on the casing 20, a rotor 50 received in the casing 20 and rotatable relative to the stator 60. The casing 20 includes a cylindrical shell 21 with an opening 210 at both ends and an end cap 23 mounted on one end of the cylindrical shell 21. A division plate 217 is integrally formed in the cylindrical shell 21 and connected with an inner surface of the cylindrical shell 21. The division plate 217 divides the cylindrical shell 21 into a first cavity 221 and a second cavity 223. The stator 60 and the rotor 50 are received in the first cavity 221. An electronic controlling unit is received in the second cavity 223. The division plate 217 further includes a main plate 2170 and a plurality of holes 218 defined on the main plate. The stator 60 includes a plurality of conductive terminals 288 extending along an axis direction of the motor. The plurality of conductive terminals 288 passes through the holes 218 to achieve an electric connection with the electronic controlling unit. The electronic controlling unit is configured to receive an external power source and/or control signal and generate corresponding drive signals to control operation of the motor 100 by the conductive terminals 288. It can be understood that the amount of holes 218 is not limited to three, and may be adjusted according to actual requires, which is not limited herein.

The motor 100 is preferably a brushless motor, and is particularly suitable for use in an automotive electric power steering (EPS) system, as well as a motor having a gas leakage prevention requirement. When the motor is used in an EPS system, a steering torque applied to steering wheel is detected by a torque sensor. The electronic controlling unit generates a corresponding driving signal according to the detection signal by the torque sensor, and the motor 100 generates an assist torque corresponding to the steering torque according to the driving signal.

The division plate 217 includes a first bearing seat 219 for holding a first bearing 30. Similarly, the end cap 23 includes a second bearing seat 239 for holding a second bearing 40. A rotating shaft 51 of the rotor 50 is supported by the first bearing 30 and the second bearing 40. One end of the rotating shaft 51 extends through the division plate 217, and is received into the second cavity 223, and the other end passes through the end cap 23.

The end cap 23 includes an end portion 231 and an annular portion 233 axially extending from an edge of the end portion 231. The annular portion is fixed to an end of the shell 21 by welding or sticking. In a preferred embodiment, an end of the annular portion 233 and the end of the shell 21 are firstly interference-fitted, and then reinforced by welding, sticking or other likes. In one embodiment, the end of the annular portion 233 is inserted into the end of the cylindrical shell 21, or the end of the cylindrical shell 21 is inserted into the end of the annular portion 233 of the end cap 23 to achieve an axial overlapping, thereby preventing contaminating dust particles from entering the casing of the motor during welding or sticking the end cap 23 to the shell 21.

In the embodiment, an annular flange 216 is formed on an end of the annular portion 233. Correspondingly, an annular groove 215 is formed on the end of the cylindrical shell 21 so as to receive the annular flange 216 of the end cap 23. Accordingly, an outer surface of the end cap 21 may be coplanar with an outer surface 213 of the cylindrical shell 21. A coplanar surface is formed on the casing of the motor, without protrusions or pits on the casing. Specifically, the annular flange 216 is formed by gradually reducing the thickness of an inner peripheral surface of the end of the annular portion 233. The annular groove 215 is formed by gradually reducing a thickness of an outer peripheral surface of the end of the cylindrical shell 21 such that an annular insertion portion is formed on the end of the the cylindrical shell 21. It can be understood that the position of the annular groove 215 and the annular flange 216 may be exchanged between the cylindrical shell 21 and the end cap 23. An annular groove can be provided on the outer circumference of the end cap 23, and an annular flange can be provided on the shell 21, and engaged with the annular groove. After the annular protrusion 216 is inserted into the annular groove 215, the two parts are welded or bonded from the outer surface of the joint. In another embodiment, annular flange 216 may also be omitted, and the annular portion 233 can be directly inserted into the annular groove. The annular groove 215 and the annular protrusion 216 may also be a plurality of grooves and flanges spaced apart in the circumferential direction of the casing. A coplanar surface 25 is formed on the casing of the motor, and there are no protrusions or pits at the junction of the cylindrical shell 21 and the end cap 23.

Furthermore, The annular flange 216 and the annular groove 215 are firstly interference-fitted, and then reinforced by welding, sticking or other likes.

Compared with the traditional motor, two ends of the shell 21 defines openings, and the shell 21 is assembled with the end cap 23 by the two openings, thereby reducing a cost. The division plate 217 and the shell 21 are formed as a single piece, and not fixed by welding or other likes, thereby preventing conductive particles generated by the welding process from entering the motor, and improving the reliability of the motor.

Furthermore, the cylindrical shell 21 and the division plate 217 are integrally formed by die casting process, and division plate is not fixed in the cylindrical shell 21 by using additional welding process as before, which may avoid conductive particles generated by the welding operation to contaminate an inner cavity of the casing of the motor. The end cap 23 formed by impact extrusion process is connected with the shell 21 by laser welding, thereby sealing the first cavity of the cylindrical shell 21. Since the laser welding process is carried out outside the casing of the motor, it does not affect internal components of the motor. Cylindrical shell with different axial lengths may be manufactured by using only one set of stamping dies, which improves the utilization rate of stamping dies and further reduces the cost. The cylindrical shell 21 formed by impact extrusion process has no pore, and the shell has good airtightness and corrosion resistance, and no additional surface treatment is required for the gas leakage. The material of the cylindrical shell 21 and the end cap 23 may be aluminium alloy.

Referring further to figures 2 through 5, Figures 2, 4 and 5 show only part of stator core and part of winding. The stator 60 has a stator core 27 and a winding 28 wound to the stator core 27. The stator core 27 includes a ring yoke 271 and a plurality of stator teeth 273 extending inward from the yoke 271, a linear slot 275 formed between each two adjacent stator teeths 273. The winding 28 is wound to the plurality of stator teeth 273 and accommodated in the slot 275. An insulated wire holder 282 is provided on the stator core 27 to isolate the corresponding stator teeth 273 and the winding 28.

In the embodiment of the present disclosure, the stator 60 further includes a terminal frame 280 provided above the stator core 27 and assembled with the division plate 217. The terminal frame 280 is an insulator, which includes an annular holder 284 and a plurality of axial holders 285 extending from the annular holder 284 along a direction parallel to the rotating shaft 51. The axial direction of the motor is the axis direction of the rotating shaft 51. In the present embodiment, the annular holder 284 is in an annular shape, and is configured to hold some electronic components, such as printed circuit board, conductive terminal, etc., to prevent conductive particles from contaminating electronic components. Each axial holder 285 is in the shape of a tube which passes through the corresponding hole 218 into the second cavity 223. A plurality of conductive terminals 288 are isolated from each other and embedded in the terminal frame 280. Each of the plurality of conductive terminals 288 includes a connecting terminal 286 for electrically connecting the winding 28 and a conductor 2881 extending from the connecting terminal 286 through the axial holder 285. Specifically, one part of the connecting terminal 286 is exposed from the annular holder 284 to electrically connect a lead of the winding 28, the other part of the connecting terminal 286 is received in the annular holder 284. The conductor 2881 of the conductive terminals 288 passes through the tube of the axial holder 285 from the first cavity 221 into the second cavity 223 for connecting external circuit. Since the holes 218 and the division plate 217 are formed by impact extrusion process, and the configuration of the terminal frame 280 further prevents conductive terminals from being contaminated by other conductive particles, which facilitates the internal cleaning of the casing and improves the reliability of motor.

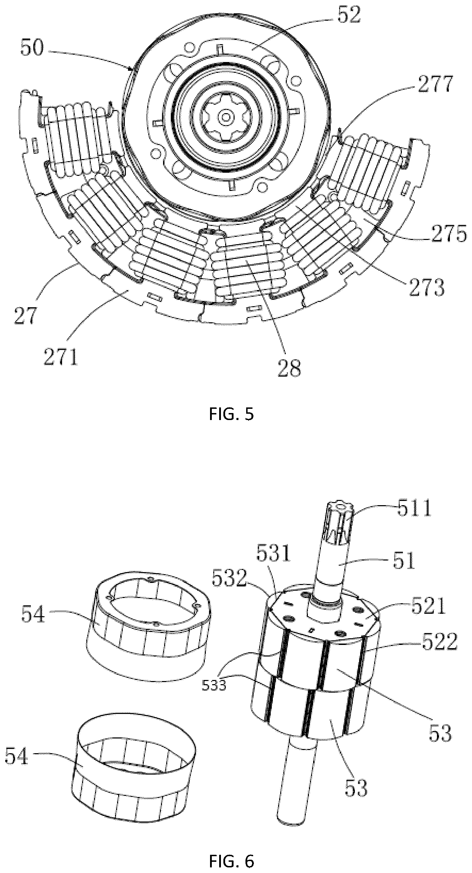

Referring further to figures 5 and 6, the rotor 50 further includes a ferrite core 52 fixedly fitted to the rotating shaft 51, a plurality of permanent magnets 53 mounted on an outer circumference of the ferrite core 52, and a rotor sleeve 54. The rotor 50 is located in a space formed by the plurality of stator teeth 273, and an air gap 277 is formed between the rotor 50 and the plurality of stator teeth 273. The ferrite core 52 rotates relative to the stator core 27 due to the air gap 277 separating the two units. One end of the rotating shaft 51 has a gear structure 511 for driving external component.

The ferrite core 52 is formed by stacking at least two core units 521 along the axial direction of the rotating shaft 51. The outer peripheral surface of each of the core units 521 is surrounded by a plurality of permanent magnets 53. Two adjacent rotor core units 521 are circumferentially offset along a predetermined angle.

The core unit 521 is a prism having a regular polygonal cross section. Preferably, an arc groove 522 is formed at each corner of the prism of the core unit 521. In the present embodiment, each core unit 521 has a cross section of a positive eight-shape with eight sides, whereby eight arc grooves 522 are formed at eight corresponding corners. The arc groove of one of the core units does not overlap the arc groove of the other of the core units in the axial direction of the rotating shaft 51. That is to say, two adjacent grooves 522 are offset each other in the axial direction. The permanent magnet 53 has an inner side surface 531 which is flat and mounted on the side surface of the corresponding core unit 521, and an outer side surface 532 which is a curved surface facing to the stator teeth 273. A gap 533 corresponding to the arc groove 522 is accordingly formed between the permanent magnets 53 adjacent to each other. Two adjacent gaps are accordingly offset each other in the axial direction. The amount of the rotor sleeves 54 is two, and is respectively sleeved on the outer circumferences of the corresponding rotor core unit 521 and permanent magnets 53 along the axial direction of the rotating shaft 51.

While the present disclosure has been descirbed with reference to a specific embodiment, the description of the disclosure is illustractive and is not to be construed as limiting the disclosure. Various of modifications to the present discloure can be made to the exemplary embodiment by those skilled in the art without departing from the ture spirit and scope of the disclosure as defined by the appended claims.

## Claims

1. A casing (20) for electric motor, comprises:
a cylindrical shell (21) having an opening (210) at both ends; and **characterized in that**
a division plate (217) is integrally formed in the cylindrical shell (21) by impact extrusion process, and the division plate (217) divides the cylindrical shell (21) into two parts of a first cavity (221) and a second cavity (223);
an end cap (23) formed by impact extrusion process is matched with the end of the cylindrical shell (21) by laser welding;
the cylindrical shell (21) and the division plate (217) are integrally formed by impact extrusion process.

2. The casing for electric motor according to claim 1, **characterized in that** the division plate (217) comprises a main plate (2170) and a plurality of holes (218) provided on the main plate (2170), a plurality of conductive terminals (288) extends along an axis direction, respectively passing through the holes (218) of the division plate (217) into the second cavity (223) for receiving driving signal.

3. The casing for electric motor as described in claim 2, **characterized in that** the cylindrical shell (21) and the main plate (2170) and the hole (218) are integrally formed by impact extrusion process.

4. The casing for electric motor according to any one of the preceding claims, **characterized in that** the end cap (23) comprises an end portion (231) and an annular portion (233) extending from the end portion (231), the annular portion (233) being inserted into the opening (210) of the cylindrical shell (21), or one end of the cylindrical shell (21) inserted into the annular portion (233) for sealing.

5. The casing for electric motor as described in claim 4, **characterized in that** an annular groove (215) is formed on an outer circumference (213) of the end of the cylindrical shell (21), the annular portion (233) of the end cap (23) is matched with the annular groove (215), or an annular groove is formed on an outer circumference of the annular portion (233) of the end cap (23), the end of the cylindrical shell (21) is matched with the annular groove of the end cap (23).

6. The casing for electric motor as described in claim 5, **characterized in that** an annular flange (216) is formed on the annular portion (233) of the end cap (23) or the end of the cylindrical shell (21) and received in corresponding annular groove.

7. The casing for electric motor according to any one of the preceding claims, **characterized in that** a coplanar surface (25) is formed at the junction of the cylindrical shell (21) and the end cap (23).

8. The casing for electric motor according to any one of the preceding claims, **characterized in that** a terminal frame (280) is assembled with the division plate (217), the terminal frame (280) being configured to hold a plurality of conductive terminals (288) extending from the first cavity (221) into the second cavity (223).

9. The casing for electric motor as described in claim 8, **characterized in that** the terminal frame (280) comprises an annular holder (284) and a plurality of axial holders (285) extending from the annular holder (284) along an axial direction, and each axial holder (285) passes through corresponding hole (218) of the division plate (217) into the second cavity (223) of the cylindrical shell (21).

10. The casing for electric motor as described in claim 9, **characterized in that** the axial holder (285) is in the shape of a tube, and the conductive terminal (288) passes through the axial holder (285) into the second cavity (223) of the cylindrical shell (21).

11. The casing for electric motor as described in claim 8 or 9, **characterized in that** the annular holder (284) is in an annular shape which is configured to receive one part of the conductive terminal (288), and another part (2881) of the the conductive terminal passes through the axial holder (285).

12. An electric motor including the casing according to one of the preceding claims, **characterized in that** a first bearing (30) is mounted on the division plate (217), a second bearing (40) is mounted on the end cap (23), and a rotating shaft (51) of a rotor (50) is supported by the first bearing (30) and the second bearing (40).

13. The electric motor including the casing as described in claim 12, **characterized in that** a stator (60) is received in the first cavity (221), the rotor (50) is rotated relative to the stator (60) and comprises at least two core units (521) formed by stacking in an axis direction, a plurality of arc grooves (522) formed on each core unit (521), two adjacent grooves are offset each other in the axial direction; and an electronic control unit is accommodated in the second cavity (223).

14. The electric motor including the casing according to one of the preceding claims, **characterized in that** the second cavity (223) is configured to accommodate an electronic control unit which is configured to receive external power supply and/or control signals and generates corresponding driving signals to control operation of the motor (100).
